# EUROPÄISCHE PATENTSCHRIFT

(11) **EP 3 441 250 B1**
(45) Veröffentlichungstag und Bekanntmachung des Hinweises auf die Patenterteilung: **25.08.2021**
(21) Anmeldenummer: 18180262.0
(22) Anmeldetag: 28.06.2018
(51) Int. Cl.: B60K 6/485, B60K 6/40, B60K 6/405, B62M 23/02, F02N 11/04

(54) **ANTRIEBSVORRICHTUNG FÜR EIN MOTORRAD**
DRIVE DEVICE FOR A MOTORCYCLE
DISPOSITIF D'ENTRAÎNEMENT POUR UN MOTOCYCLE

(30) Priorität: 08.08.2017 DE 102017213723
(43) Veröffentlichungstag der Anmeldung: 13.02.2019
(73) Patentinhaber: Bayerische Motoren Werke Aktiengesellschaft, 80809 München (DE)
(72) Erfinder: Gatzka, Norbert, 85386 Eching (DE); Hoehl, Johannes, 82216 Maisach, Ortsteil Oberlappach (DE)

(56) Entgegenhaltungen:
- EP-A1- 2 236 339
- EP-A1- 3 150 479
- EP-A2- 1 954 940
- JP-A- 2010 077 819

## Beschreibung

Die Erfindung betrifft eine Antriebsvorrichtung für ein Motorrad. In Motorrädern werden üblicherweise Antriebsvorrichtungen eingesetzt, welche eine besonders kompakte Bauweise haben. Solche Antriebsvorrichtungen sind insbesondere in Motorrädern notwendig, weil hier nur ein sehr begrenzter Bauraum zur Verfügung steht. Gleichzeitig besteht vermehrt die Anforderung, auch Motorräder mit alternativen Antrieben, insbesondere mit Hybrid-Antrieben bestehend aus Verbrennungskraftmaschine und Elektromotor, auszustatten. Dies sollte insbesondere auch innerhalb einer Baureihe eines Motorradtyps ohne unnötig vollständige Umkonstruktion ermöglicht werden.

EP 3 150 479 A1 offenbart eine Antriebsvorrichtung für ein Motorrad gemäß dem Oberbegriff des Anspruchs 1.

Hiervon ausgehend soll eine neue Antriebsvorrichtung für ein Motorrad vorgestellt werden, welche insbesondere auch für die Ausbildung von Hybrid-Systemen umfassend Verbrennungskraftmaschine und Elektromotor geeignet ist.

Diese Aufgaben werden gelöst mit einer Antriebsvorrichtung gemäß den Merkmalen des Anspruchs 1. Weitere vorteilhafte Ausführungsvarianten der Antriebsvorrichtung sind in den abhängig formulierten Ansprüchen angegeben.

Die Erfindung gemäß Anspruch 1 umfasst eine Antriebsvorrichtung für ein Motorrad aufweisend eine Verbrennungskraftmaschine mit einer ersten Stirnseite sowie einer der ersten Stirnseite gegenüberliegenden zweiten Stirnseite sowie einer Adapterbaugruppe mit einer Kopplungsstirnseite sowie einer der Kopplungsstirnseite gegenüberliegenden Anschlussstirnseite, wobei die Stirnseiten jeweils senkrecht zu Achsen und Wellen der Verbrennungskraftmaschine und der Adapterbaugruppe ausgerichtet sind, wobei weiter die Adapterbaugruppe derart an der Verbrennungskraftmaschine angeordnet ist, dass die erste Stirnseite und die Kopplungsstirnseite aneinander liegen, wobei die Anschlussstirnseite eine Anschlussgeometrie für ein elektrisches Antriebsaggregat aufweist.

Die Adapterbaugruppe ist insbesondere ein universeller Adapter, der in einem Baukastenprinzip für verschiedene Antriebsvorrichtungen für ein Motorrad eingesetzt werden kann. Die Adapterbaugruppe ermöglicht es, insbesondere unterschiedliche Kombinationen der Verbrennungskraftmaschine mit verschiedenen elektrischen Antriebsaggregaten mit geringem zusätzlichen Konstruktionsaufwand zu realisieren.

Die Verbrennungskraftmaschine und die Adapterbaugruppe haben jeweils Achsen und Wellen. Hierzu zählt beispielsweise die Kurbelwelle und die Achse, auf welcher die Kurbelwelle liegt. Hierzu zählen beispielsweise auch Wellen und Achsen von Ventilantrieben, Ausgleichswellen etc. Alle Achsen und Wellen von der Verbrennungskraftmaschine und der Adapterbaugruppe sind üblicherweise parallel zueinander ausgerichtet. Die Stirnseiten (erste Stirnseite und zweite Stirnseite der Verbrennungskraftmaschine sowie Kopplungsstirnseite und Anschlussstirnseite der Adapterbaugruppe) sind senkrecht bzw. normal zu diesen Achsen und Wellen ausgerichtet.

Die erste Stirnseite und die Kopplungsstirnseite sind nach Art von miteinander korrespondierenden Flanschflächen gestaltet, die wie beschrieben aneinander anliegen, wenn die Antriebsvorrichtung montiert ist. Die Kopplungsstirnseite der Adapterbaugruppe wird als Kopplungsstirnseite bezeichnet, weil sie zur Ankopplung der Adapterbaugruppe an die Verbrennungskraftmaschine dient.

Das an die Anschlussgeometrie anschließbare elektrische Antriebsaggregat ist bevorzugt eine elektrische Antriebsmaschine.

Besonders bevorzugt ist die Verbrennungskraftmaschine nach Art eines Boxermotors aufgebaut. Boxermotoren haben eine kompakte Bauhöhe und eignen sich besonders für den Einsatz in Motorrädern.

Die Adapterbaugruppe umfasst insbesondere Mittel zur Übertragung mechanischer Drehmomente von einer Kurbelwelle der Verbrennungskraftmaschine zu der Anschlussgeometrie. Die Anschlussgeometrie umfasst bevorzugt einen Flansch, an welchen das elektrische Antriebsaggregat (insbesondere die elektrische Antriebsmaschine) derart angeschlossen werden kann, dass Drehmomente von dieser Komponente zur Kurbelwelle der Verbrennungskraftmaschine übertragen werden können und umgekehrt.

Die an die Anschlussgeometrie angeschlossene Antriebsmaschine hat insbesondere den Zweck, einen signifikanten Beitrag zur mechanischen Antriebsleistung der Antriebsvorrichtung insgesamt zu leisten.

Bevorzugt ist die elektrische Antriebsmaschine darüber hinaus dazu eingerichtet, die Funktion eines Generators zu übernehmen. In der Funktion eines Generators ist die elektrische Antriebsmaschine dazu eingerichtet, mechanische Leistung in elektrische Leistung umzuwandeln. Diese elektrische Leistung kann in einem Akkumulator chemisch gespeichert werden und später dazu genutzt werden, von der elektrischen Antriebsmaschine zurück in mechanische Leistung umgewandelt zu werden.

Bevorzugt ist die elektrische Antriebsmaschinedarüber hinaus dazu eingerichtet, die Funktion eines Startermotors zu übernehmen. In der Funktion eines Startermotors ist die elektrische Antriebsmaschine dazu eingerichtet, die Verbrennungskraftmaschine zu starten.

Gleichzeitig ist die Antriebsvorrichtung besonders kompakt, besonders leicht und besonders kostengünstig. Dies wird insbesondere dadurch erreicht, dass an der Adapterbaugruppe nur eine Anschlussgeometrie für eine elektrische Antriebsmaschine vorgesehen ist und zusätzliche Anschlussgeometrien für einen Startergenerator und/oder einen Startermotor entfallen.

Die Adapterbaugruppe mit genau einer Anschlussgeometrie dient insbesondere dem Zweck, eine flexibel einsetzbare Ankopplung der Verbrennungskraftmaschine an verschiedene elektrische Antriebsmaschinen zu ermöglichen. Die Anschlussgeometrie an der Adapterbaugruppe ist insbesondere dazu ausgelegt, elektrische Antriebsmaschinen mit sich stark unterscheidenden Leistungen und Drehmomenten auszulegen [?]. Eine kleinste elektrische Antriebsmaschine, für welche die Anschlussgeometrie ausgelegt ist, hat beispielsweise eine (maximale) Leistung und/oder ein (maximales) Drehmoment von 20 Prozent der maximalen Leistung bzw. des maximalen Drehmoments der Verbrennungskraftmaschine. Eine größte elektrische Antriebsmaschine, für welche die Anschlussgeometrie ausgelegt ist, hat beispielsweise eine (maximale) Leistung und/oder ein (maximales) Drehmoment von 200 Prozent der maximalen Leistung bzw. des maximalen Drehmoments der Verbrennungskraftmaschine.

Die Anschlussgeometrie ist darüber hinaus bevorzugt so ausgeführt, dass verschieden groß dimensionierte elektrische Antriebsmaschinen daran montiert werden können. Mit der "Größe" einer elektrischen Antriebsmaschine ist in diesem Zusammenhang insbesondere die Dimensionierung der elektrischen Antriebsmaschine hinsichtlich ihrer Antriebsleistung gemeint. Elektrische Antriebsmaschinen mit einer hohen Antriebsleistung erzeugen zugleich auch große Drehmomente.

Weiterhin vorteilhaft ist die Erfindung, wenn innerhalb der Adapterbaugruppe ein Zahnradsystem zur Kraftübertragung von Antriebskraft von der Verbrennungskraftmaschine zu den Anschlussgeometrien und umgekehrt angeordnet ist.

Solche Zahnradsysteme bilden dann bevorzugt Mittel zur Übertragung wirkender Drehmomente von der Verbrennungskraftmaschine zu den jeweiligen Anschlussgeometrien. Dieses Zahnradsystem ist bevorzugt zur Übertragung mechanischer Drehmomente ausgelegt, welche mindestens 30 Prozent des maximalen mechanischen Drehmoments der Verbrennungskraftmaschine beträgt. Besonders bevorzugt ist das Zahnradsystem sogar zur Übertragung von mechanischen Drehmomenten ausgelegt, welche mindestens 50 oder sogar 100 Prozent des maximalen mechanischen Drehmoments der Verbrennungskraftmaschine beträgt.

Die hier vorgeschlagene (untere) Grenze des maximalen Drehmoments von 30 Prozent bzw. 50 Prozent bzw. sogar 100 Prozent bezieht sich jedoch nicht nur auf Mittel zur Übertragung von Drehmomenten zu der zweiten Anschlussgeometrie, sondern bevorzugt auf das Zahnradsystem, welches alle Anschlussgeometrien mechanisch bzw. drehmomentübertragend miteinander verbindet. Durch die hier vorgeschlagene Untergrenze von mindestens 30 Prozent bzw. 50 Prozent bzw. 100 Prozent wird eine noch stärkere Auslegung des Zahnradsystems vorgeschlagen. Sämtliche hier vorgeschlagenen Drehmomentwerte beziehen sich jeweils auf ein mittleres Drehmoment während einer (kontinuierlichen) Leistungsübertragung und nicht auf Drehmomentspitzen, die für einzelne Umdrehungen und Drehwinkel kurzzeitig auftreten können. Gegenüber solchen Drehmomentspitzen ist das Zahnradsystem bevorzugt noch erheblich widerstandsfähiger und kann besonders bevorzugt demnach auch sehr viel höhere Drehmomentspitzen bzw. stoßartige Drehmomente verkraften. Besonders bevorzugt ist das Zahnradsystem sogar zur Übertragung mechanischer Drehmomente ausgelegt, welche mindestens 50 Prozent, mindestens 100 Prozent oder sogar mindestens 200 Prozent des maximalen mechanischen Drehmoments der Verbrennungskraftmaschine beträgt.

Hierdurch kann gewährleistet sein, dass das Zahnradsystem auch dann geeignet ist, die auftretenden Kräfte zu übertragen, wenn an der Antriebsvorrichtung eine stark dimensionierte elektrische Antriebsmaschine vorgesehen ist. Bevorzugt sind in den Mitteln zur Übertragung von wirkenden Drehmomenten in der Adapterbaugruppe auch Mittel zur Abdämpfung und/oder zur Entkopplung von stark fluktuierenden Drehmomenten - insbesondere stoßartigen Drehmomenten - vorgesehen. Solche Drehmomente können von der Verbrennungskraftmaschine erzeugt werden und je nach Ausführungsform der elektrischen Antriebsaggregate ist es vorteilhaft, durch Mittel zur Abdämpfung und/oder Entkopplung einen Schutz der elektrischen Antriebsaggregate zu gewährleisten. Insbesondere größere elektrische Antriebsmaschinen haben ein großes Massenträgheitsmoment, welches von fluktuierenden Drehmomenten regelmäßig beschleunigt und wieder abgebremst wirkt. Dies führt zu einer mechanischen Wechselbelastung, die in der elektrischen Antriebsmaschine und/oder in der Anschlussgeometrie eine starke Alterung und gegebenenfalls auch Beschädigungen hervorruft. Durch geeignete Mittel zur Abdämpfung und/oder Entkopplung in der Adapterbaugruppe kann dies verhindert werden.

Das Zahnradsystem umfasst insbesondere ein Planetengetriebe. Planetengetriebe sind sehr kompakt und dabei dazu geeignet hohe Drehmomente zu übertragen. Das Zahnradsystem stellt zwischen der Verbrennungskraftmaschine und der Anschlussgeometrie bzw. einem an der Anschlussgeometrie angeschlossenen elektrischen Antriebsaggregat ein Übersetzungsverhältnis von mindestens 1:2 bevorzugt sogar 1:3 oder sogar 1:4 bereit. Dabei ist das Zahnradsystem bzw. das Planetengetriebe bevorzugt so eingerichtet, dass die höhere Drehzahl an der Anschlussgeometrie anliegt, bzw. an dem elektrischen Antriebsaggregats, welches an die Anschlussgeometrie angeschlossen ist. Die niedrigere Drehzahl liegt dementsprechend bevorzugt an der Verbrennungskraftmaschine an.

Bevorzugt ist in der Adapterbaugruppe auch eine Kupplung angeordnet, die zur drehzahlabhängigen Drehmomentübertragung eingerichtet ist.

Mit "drehzahlabhängiger Drehmomentübertragung" ist hier jede beliebige Abhängigkeit zwischen der Drehzahl und dem übertragenen Drehmoment und insbesondere zwischen der Drehzahl und einem maximal übertragenen Drehmoment gemeint.

Die Kupplung ist insbesondere dazu eingerichtet die Anschlussgeometrie bzw. ein an die Anschlussgeometrie angeschlossenes elektrisches Aggregat bei einer bestimmten Drehzahl von der Verbrennungskraftmaschine abzukoppeln.

Besonders bevorzugt ist die Kupplung rein mechanisch gesteuert. Die Kupplung ist beispielsweise nach Art einer Rutschkupplung ausgeführt, die ab einem vorgegebenen maximalen Drehmoment durchrutscht und damit keine Drehzahl mehr überträgt. Das heißt, dass das maximal zu übertragene Drehmoment allein durch die Mechanik der Kupplung eingestellt ist. Es gibt besonders bevorzugt keine Elektronik, die die anliegende Drehzahl und/oder das wirkende Drehmoment auf der Kupplung überwacht und die in Abhängigkeit von der anliegenden Drehzahl und/oder dem wirkenden Drehmoment schaltet.

Die Kupplung ist bevorzugt direkt an der Anschlussgeometrie bzw. zwischen dem Zahnradsystem und/oder dem Planetengetriebe und der Anschlussgeometrie und/oder zwischen dem Zahnradsystem und/oder dem Planetengetriebe und dem elektrischen Antriebsaggregat angeordnet.

Diese Kupplung ist bevorzugt drehzahlabhängig gesteuert. Bevorzugt hat diese Kupplung eine Grenzdrehzahl, ab der die Kupplung kein Drehmoment mehr überträgt oder ab der ein von der Kupplung übertragenes Drehmoment zumindest begrenzt ist. Es ist auch möglich, dass die Kupplung grundsätzlich eine über die Adapterbaugruppe (von der Verbrennungskraftmaschine zur Anschlussgeometrie und/oder umgekehrt) übertragenes Drehmoment begrenzt. Hierdurch kann ein Schutz vor Überlast durch hohe Drehmomente und/oder Drehzahlen erreicht werden. Mit einer Kupplung kann eine drehzahlabhängige Durchlässigkeit der Adapterbaugruppe für Drehmomente in beide Drehmomentübertragungsrichtungen oder nur in eine Drehmomentübertragungseinrichtung aufweisen. Die Durchlässigkeit für Drehmomente kann insbesondere durch ein drehzahlabhängiges maximales Drehmoment gekennzeichnet sein, welches von der Drehmomentübertragungseinrichtung übertragen wird. Es existieren zwei Drehmomentübertragungsrichtungen. Eine erste Drehmomentübertragungsrichtung ist von der Verbrennungskraftmaschine zur Anschlussgeometrie bzw. zu dem an der Anschlussgeometrie angeschlossenen elektrischen Antriebsaggregat hin ausgerichtet. Eine zweite Drehmomentübertragungsrichtung ist von der Anschlussgeometrie bzw. von dem an der Anschlussgeometrie angeschlossenen elektrischen Antriebsaggregat hin zu der Verbrennungskraftmaschine ausgerichtet.

Weiterhin vorteilhaft ist die Antriebsvorrichtung, wenn an der zweiten Stirnseite der Verbrennungskraftmaschine eine Kupplungsbaugruppe angeordnet ist, welche dazu eingerichtet ist, eine Übertragung von mechanischer Antriebsleistung der Verbrennungskraftmaschine an ein Getriebe zu steuern.

Die Übertragung von mechanischer Antriebsleistung umfasst insbesondere die Übertragung von Drehmomenten. Die Kupplungsbaugruppe umfasst insbesondere eine mechanische Kupplung, mit welcher eine drehmomentübertragende Verbindung zwischen den Antriebsmaschinen (Verbrennungskraftmaschine und elektrische Antriebsmaschine) und dem Getriebe gesteuert werden kann.

Mechanische Antriebsleistung, die von einer an der Adapterbaugruppe befestigten elektrischen Antriebsmaschine erzeugt wird, wird demnach über die Kurbelwelle der Verbrennungskraftmaschine durch die Verbrennungskraftmaschine hindurch zu der Kupplungsbaugruppe geleitet. Die Kupplungsbaugruppe sitzt an der gegenüberliegenden Anschlussseite der Kurbelwelle.

Erfindungsgemäß ist ein Getriebe derart seitlich unterhalb der Verbrennungskraftmaschine angeordnet, dass es sich zwischen der ersten Stirnseite und einer zweiten Stirnseite erstreckt, wobei eine Abtriebswelle des Getriebes sich durch eine dafür vorgesehene Öffnung in der Adapterbaugruppe durch die gesamte Adapterbaugruppe hindurch erstreckt.

Durch diese Anordnung bildet die Antriebsvorrichtung eine besonders kompakte Baugruppe.

Hier auch beschrieben werden soll ein Motorrad aufweisend eine beschriebene Antriebsvorrichtung. Das Motorrad zeichnet sich insbesondere dadurch aus, dass es Teil einer Baureihe von Motorrädern ist, die insbesondere Motorräder mit Hybridantrieb umfasst.

Die Erfindung sowie das technische Umfeld werden nachfolgend anhand der Figuren näher erläutert. Die Erfindung ist auf die Figuren jedoch nicht beschränkt. Es zeigen:
- Fig. 1:: eine beschriebene Antriebsvorrichtung in einer seitlichen Ansicht,
- Fig. 2:: eine beschriebene Antriebsvorrichtung in einer stirnseitigen Ansicht,
- Fig. 3:: eine beschriebene Antriebsvorrichtung in einer zweiten Konfiguration in einer stirnseitigen Ansicht, und
- Fig. 4:: ein Motorrad aufweisend eine beschriebene Antriebsvorrichtung.

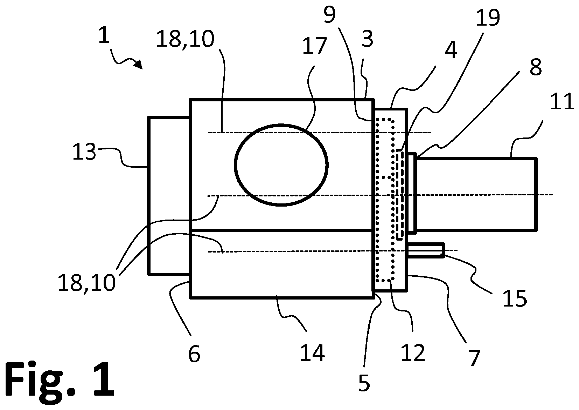

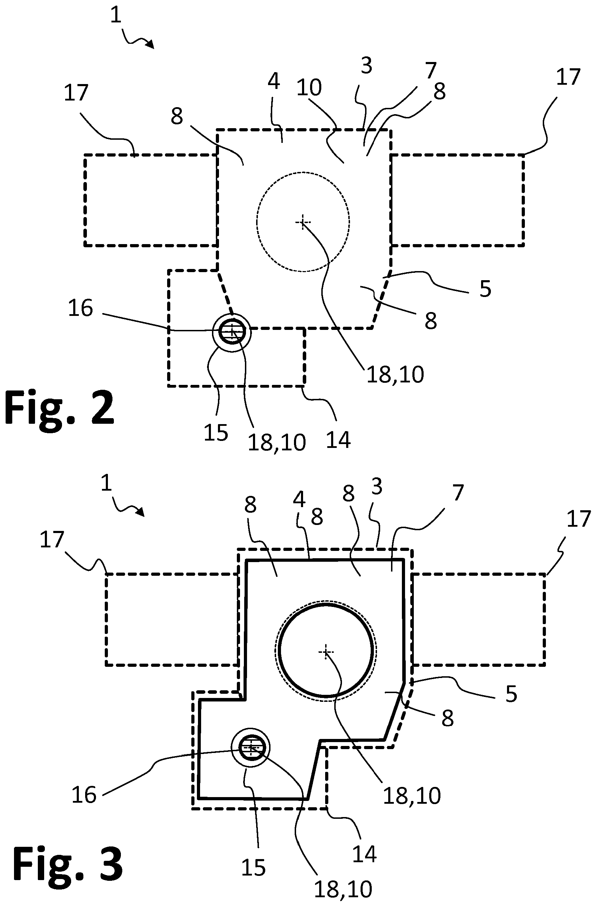

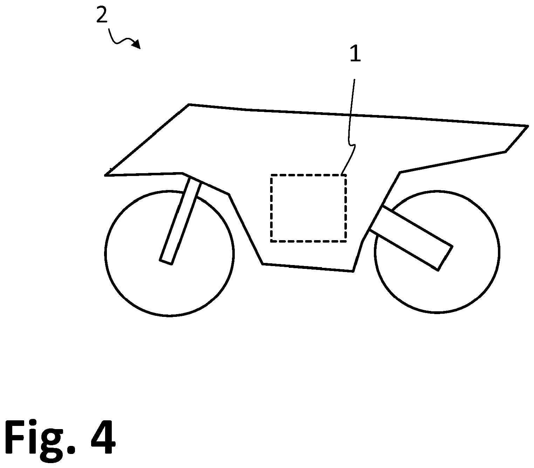

Die Fig. 1 bis 3 zeigen jeweils eine Antriebsvorrichtung 1 in einer seitlichen Ansicht und in einer stirnseitigen Ansicht. Die Fig. 1 und 3 zeigen eine erste Konfiguration, die Fig. 2 und 4 zeigen eine zweite Konfiguration. Zu erkennen ist jeweils, dass die Antriebsvorrichtung 1 eine Verbrennungskraftmaschine 3 aufweist, an welcher an einer ersten Stirnseite 5 eine Adapterbaugruppe 4 angeordnet ist. Die Adapterbaugruppe 4 weist eine ab der ersten Stirnseite 5 anliegende Kopplungsstirnseite 9 und eine ab der ersten Stirnseite 5 bzw. der gegenüberliegenden Anschlussstirnseite 7 auf, an welcher eine Anschlussgeometrie 8 zum Anschließen eines elektrischen Antriebsaggregates 11 [11 ist in BZ-Liste anders bezeichnet] vorgesehen sind. Die Verbrennungskraftmaschine 3, die Adapterbaugruppe 4 und das elektrische Antriebsaggregat 11 [s. o.] haben jeweils Achsen 10 und Wellen 18, zu welchen die Stirnseiten 5, 6 die Anschlussstirnseite 7 und die Kopplungsstirnseite 9 senkrecht ausgerichtet sind. Das elektrische Antriebsaggregat ist eine elektrische Antriebsmaschine. Die Verbrennungskraftmaschine 3 ist ein Boxermotor, dessen Zylinder 17 hier jeweils schematisch dargestellt sind. Zwischen den Zylindern 17 befindet sich die hier nicht dargestellte Kurbelwelle, welche zur Kraftübertragung an ein Zahnradsystem 12 innerhalb der Adapterbaugruppe 4 angeschlossen ist. Das Zahnradsystem 12 ist bevorzugt als Planetengetriebe ausgeführt. In der Adapterbaugruppe 4 kann darüber hinaus eine Kupplung 19 vorgesehen sein. Bevorzugt ist die Kupplung (wie in Fig. 1 dargestellt) zwischen dem Zahnradsystem 12 und der Anschlussgeometrie 8 angeordnet. Besonders bevorzugt ist die Kupplung so ausgeführt, dass das drehzahlabhängig ein maximales Drehmoment festgelegt ist, welches von der Kupplung übertragen wird. Insbesondere bevorzugt existiert eine Grenzdrehzahl oberhalb welcher die Kupplung zumindest in eine Drehmomentübertragungsrichtung kein Drehmoment mehr überträgt. An einer der ersten Stirnseite 5 gegenüberliegenden zweiten Stirnseite 6 der Verbrennungskraftmaschine ist eine Kupplungsbaugruppe 13 angeordnet, welche dazu dient, von der Antriebsvorrichtung 1 erzeugte mechanische Leistung an ein Getriebe 14 zu übertragen. Das Getriebe 14 ist seitlich unterhalb der Verbrennungskraftmaschine 3 angeordnet. Eine Abtriebswelle 15, über welche Kraft aus dem Getriebe an einen Antrieb eines Fahrzeugs, bspw. eines Motorrads, übertragen werden kann, erstreckt sich durch eine Öffnung 16 der Adapterbaugruppe 4 hindurch.

Fig. 4 zeigt hier nur beispielhaft ein Motorrad 2, welches mit einer beschriebenen Antriebsvorrichtung ausgestattet ist.

### Bezugszeichenliste

- 1: Antriebsvorrichtung
- 2: Motorrad
- 3: Verbrennungskraftmaschine
- 4: Adapterbaugruppe
- 5: erste Stirnseite
- 6: zweite Stirnseite
- 7: Anschlussstirnseite
- 8: Anschlussgeometrie
- 9: Kopplungsstirnseite
- 10: Achse
- 11: elektrische Antriebsmaschine
- 12: Zahnradsystem
- 13: Kupplungsbaugruppe
- 14: Getriebe
- 15: Abtriebswelle
- 16: Öffnung
- 17: Zylinder
- 18: Welle
- 19: Kupplung

## Patentansprüche

1. Antriebsvorrichtung (1) für ein Motorrad (2) aufweisend eine Verbrennungskraftmaschine (3) mit einer ersten Stirnseite (5) sowie einer der ersten Stirnseite (5) gegenüberliegenden zweiten Stirnseite (6) sowie eine Adapterbaugruppe (4) mit einer Kopplungsstirnseite (9) sowie einer der Kopplungsstirnseite (9) gegenüberliegenden Anschlussstirnseite (7), wobei die Stirnseiten (5, 6, 7, 9) jeweils senkrecht zu Achsen (10) und Wellen (18) der Verbrennungskraftmaschine (3) und der Adapterbaugruppe (4) ausgerichtet sind, wobei weiter die Adapterbaugruppe (4) derart an der Verbrennungskraftmaschine (3) angeordnet ist, dass die erste Stirnseite (5) und die Kopplungsstirnseite (9) aneinander liegen, wobei die Anschlussstirnseite (7) eine Anschlussgeometrie (8) für ein elektrisches Antriebsaggregat (11) aufweist und wobei ein Getriebe (14) derart seitlich unterhalb der Verbrennungskraftmaschine (3) angeordnet ist, dass es sich zwischen der ersten Stirnseite (5) und der zweiten Stirnseite (6) erstreckt, **dadurch gekennzeichnet, dass** eine Abtriebswelle (15) des Getriebes (14) sich durch eine dafür vorgesehene Öffnung (16) in der Adapterbaugruppe (4) durch die gesamte Adapterbaugruppe (4) hindurch erstreckt.

2. Antriebsvorrichtung (1) nach Anspruch 1, wobei die Verbrennungskraftmaschine (3) nach Art eines Boxermotors aufgebaut ist.

3. Antriebsvorrichtung (1) nach einem der vorhergehenden Ansprüche, wobei die Antriebsvorrichtung (1) als Antriebsaggregat (11) eine elektrische Antriebsmaschine umfasst.

4. Antriebsvorrichtung (1) nach einem der vorhergehenden Ansprüche, wobei innerhalb der Adapterbaugruppe (4) ein Zahnradsystem (12) zur Kraftübertragung von Antriebskraft von der Verbrennungskraftmaschine (3) zu der Anschlussgeometrie (8) und umgekehrt angeordnet ist.

5. Antriebsvorrichtung (1) nach Anspruch 4, wobei das Zahnradsystem (12) zur Übertragung eines mechanischen Drehmoments ausgelegt ist, welches mindestens 30 % des maximalen mechanischen Drehmoments der Verbrennungskraftmaschine (3) beträgt.

6. Antriebsvorrichtung (1) nach einem der vorhergehenden Ansprüche, wobei in der Adapterbaugruppe (4) eine Kupplung (19) angeordnet ist, die zur drehzahlabhängigen Drehmomentübertragung eingerichtet ist.

7. Antriebsvorrichtung (1) nach einem der vorhergehenden Ansprüche, wobei an der zweiten Stirnseite (6) der Verbrennungskraftmaschine (3) eine Kupplungsbaugruppe (13) angeordnet ist, welche dazu eingerichtet ist, eine Übertragung von mechanischer Antriebsleistung der Verbrennungskraftmaschine (3) an ein Getriebe (14) zu steuern.

8. Motorrad (2) aufweisend eine Antriebsvorrichtung (1) nach einem der vorhergehenden Ansprüche.

## Claims

1. Drive apparatus (1) for a motorcycle (2) having an internal combustion engine (3) with a first end side (5), and with a second end side (6) which lies opposite the first end side (5), and with an adapter assembly (4) with a coupling end side (9) and a connector end side (7) which lies opposite the coupling end side (9), the end sides (5, 6, 7, 9) being oriented in each case perpendicularly with respect to axles (10) and shafts (18) of the internal combustion engine (3) and the adapter assembly (4), the adapter assembly (4) being arranged, furthermore, on the internal combustion engine (3) in such a way that the first end side (5) and the coupling end side (9) bear against one another, the connector end side (7) having a connector geometry (8) for an electric drive assembly (11), and a transmission (14) being arranged laterally below the internal combustion engine (3) in such a way that it extends between the first end side (5) and the second end side (6), **characterized in that** an output shaft (15) of the transmission (14) extends through the entire adapter assembly (4) through an opening (16) provided for this purpose in the adapter assembly (4).

2. Drive apparatus (1) according to Claim 1, the internal combustion engine (3) being constructed in the manner of a boxer engine.

3. Drive apparatus (1) according to either of the preceding claims, the drive apparatus (1) comprising an electric drive machine as drive assembly (11).

4. Drive apparatus (1) according to one of the preceding claims, a gearwheel system (12) for the transmission of drive power from the internal combustion engine (3) to the connector geometry (8) and vice versa being arranged within the adapter assembly (4).

5. Drive apparatus (1) according to Claim 4, the gearwheel system (12) being designed for the transmission of a mechanical torque which is at least 30% of the maximum mechanical torque of the internal combustion engine (3).

6. Drive apparatus (1) according to one of the preceding claims, a clutch (19) which is set up for the rotational speed-dependent transmission of torque being arranged in the adapter assembly (4).

7. Drive apparatus (1) according to one of the preceding claims, a clutch assembly (13) being arranged on the second end side (6) of the internal combustion engine (3), which clutch assembly (13) is set up to control a transmission of mechanical drive power of the internal combustion engine (3) to a transmission (14).

8. Motorcycle (2) having a drive apparatus (1) according to one of the preceding claims.

## Revendications

1. Dispositif d'entraînement (1) destiné à une motocyclette (2) et comportant un moteur à combustion interne (3), pourvu d'une première face frontale (5) et d'une deuxième face frontale (6) opposée à la première face frontale (5), et un ensemble adaptateur (4) pourvu d'une face d'accouplement frontale (9) d'une face de raccordement frontale (7) opposée à la face d'accouplement frontale (9), les faces frontales (5, 6, 7, 9) étant chacune orientées perpendiculairement aux axes (10) et aux arbres (18) du moteur à combustion interne (3) et de l'ensemble adaptateur (4), l'ensemble adaptateur (4) étant en outre disposé sur le moteur à combustion interne (3) de telle sorte que la première face frontale (5) et la face d'accouplement frontale (9) viennent en appui l'une contre l'autre, la face de raccordement frontale (7) présentant une géométrie de raccordement (8) destinée à une unité d'entraînement électrique (11) et une transmission (14) étant disposée latéralement au-dessous du moteur à combustion interne (3) de telle sorte qu'elle s'étende entre la première face frontale (5) et la deuxième face frontale (6), **caractérisé en ce qu'**un arbre de sortie (15) de la transmission (14) s'étend à travers tout l'ensemble adaptateur (4) par une ouverture (16) ménagée à cet effet dans l'ensemble adaptateur (4).

2. Dispositif d'entraînement (1) selon la revendication 1, le moteur à combustion interne (3) étant construit à la manière d'un moteur boxer.

3. Dispositif d'entraînement (1) selon l'une des revendications précédentes, le dispositif d'entraînement (1) comprenant comme unité d'entraînement (11) une machine d'entraînement électrique.

4. Dispositif d'entraînement (1) selon l'une des revendications précédentes, un système de roues dentées (12) étant agencé à l'intérieur de l'ensemble adaptateur (4) pour la transmission de force motrice du moteur à combustion interne (3) à la géométrie de raccordement (8) et inversement.

5. Dispositif d'entraînement (1) selon la revendication 4, le système de roues dentées (12) étant conçu pour transmettre un couple mécanique qui est au moins égal à 30 % du couple mécanique maximal du moteur à combustion interne (3).

6. Dispositif d'entraînement (1) selon l'une des revendications précédentes, un embrayage (19), qui est conçu pour transmettre un couple en fonction de la vitesse de rotation, étant disposé dans l'ensemble adaptateur (4).

7. Dispositif d'entraînement (1) selon l'une des revendications précédentes, un ensemble d'embrayage (13), qui est conçu pour transmettre la puissance d'entraînement mécanique du moteur à combustion interne (3) à une transmission (14), étant disposé sur la deuxième face frontale (6) du moteur à combustion interne (3).

8. Motocyclette (2) comportant un dispositif d'entraînement (1) selon l'une des revendications précédentes.
